# EUROPÄISCHE PATENTSCHRIFT

(11) **EP 2 369 606 B1**
(45) Veröffentlichungstag und Bekanntmachung des Hinweises auf die Patenterteilung: **02.07.2014**
(21) Anmeldenummer: 11002436.1
(22) Anmeldetag: 24.03.2011
(51) Int. Cl.: H02G 3/14, H05B 37/02

(54) **Vorrichtung zur Aufnahme einer mobilen Einheit**
Device for holding a mobile unit
Dispositif de réception d'une unité mobile

(30) Priorität: 26.03.2010 DE 102010013117
(43) Veröffentlichungstag der Anmeldung: 28.09.2011
(73) Patentinhaber: GIRA GIERSIEPEN GmbH & Co. KG, D-42477 Radevormwald (DE)
(72) Erfinder: Kemmann, Harald, 42555 Velbert (DE); Seifert, Roland, 59071 Hamm (DE)
(74) Vertreter: Tönhardt, Marion

(56) Entgegenhaltungen:
- EP-A2- 0 802 465
- DE-U1-202008 004 757
- US-A1- 2009 251 352

## Beschreibung

Die Erfindung betrifft eine Vorrichtung zur Aufnahme einer mobilen Einheit.

Aus dem Stand der Technik ist eine Vielzahl von Systemen bekannt, welche die zentrale oder dezentrale Steuerung von Gebäudetechnik erlauben. Mit Hilfe derartiger Systeme ist es beispielsweise den Bewohnern eines Gebäudes möglich, dezentral oder über eine zentrale Steuereinheit die Raumtemperatur des Gebäudes zu regulieren, indem etwa fernsteuerbare Thermostatventile individuell für jeden Raum nachgeregelt werden, oder direkt ein zentrales Heizungssystem angesteuert wird. Ähnliche Systeme sind zum Beispiel für die Beleuchtungssteuerung, die Ansteuerung von Rollomotoren, oder ganz allgemein für die Steuerung der Stromversorgung innerhalb eines Gebäudes zur Inbetriebnahme bzw. Außerbetriebnahme einzelner elektrischer Verbraucher bekannt.

Häufig ist dazu eine zentrale oder dezentrale Steuereinheit vorgesehen, welche neben der Ansteuerung einzelner Gebäudesystemkomponenten auch deren Ist-Zustand anzeigen kann. Die Kommunikation zwischen der Steuereinheit sowie den einzelnen Gebäudesystemkomponenten kann drahtgebunden oder drahtlos ausgeführt sein.

Unabhängig von der vorbenannten zentralen oder dezentralen Gebäudesteuerung, jedoch auch in Verbindung mit einer solchen, ist es darüber hinaus bekannt, einzelne Gebäudesystemkomponenten drahtlos oder drahtgebunden über eine Fernbedienung anzusteuern, was ebenfalls bereits Komfortvorteile hat, da ein Bewohner des Gebäudes mit Hilfe einer solchen Fernbedienung beispielsweise nicht mehr eine Vielzahl von an unterschiedlichen Orten liegenden Schaltern betätigen muss, sondern dezentral über die Fernbedienung und damit annähernd unabhängig von seinem Standpunkt beispielsweise das Licht an und die Lüftung ausschalten kann.

Eine Vorrichtung zur Aufnahme einer mobilen Einheit ist aus EP-A-0802465 bekannt. Aus dem Stand der Technik sind bisher jedoch keine Gebäudesteuerungssysteme bekannt, bei denen mobile, d. h. tragbare oder in der Hand zu haltende Bedien- und/oder Anzeigeeinheiten, wie beispielsweise Funkfernbedienungen, mit gebäudegebundenen, d. h. beispielsweise unter Putz montierten, Steuereinheiten zusammenwirken, und bei denen auf eine direkte Funkverbindung zwischen der mobilen Einheit und entweder der dezentralen gebäudefesten Steuereinheit oder jedem ansteuerbaren Gebäudesystemelement verzichtet werden könnte. Des Weiteren wäre eine Vorrichtung wünschenswert, welche eine Verbindung für den Datenaustausch zwischen einer mobilen Bedien- und/oder Anzeigeeinheit und einem Gebäudesteuerungs-Bus-System oder einer einer einzelnen Gebäudesystemkomponente zugeordneten lokalen Bedien- und/oder Anzeigeeinheit herstellt, die gleichzeitig einerseits eine Eingabe zur manuellen Ansteuerung des dezentralen Gebäudesteuerungs-Bus-Systems bzw. der lokalen Einheit vorsieht, andererseits jedoch auch für die Aufnahme einer mobilen Bedien- und/oder Anzeigeeinheit geeignet ist, in einer Weise, dass eine solche Vorrichtung unabhängig davon, ob eine mobile Einheit in dieser aufgenommen ist oder nicht, ein im Wesentlichen identisches äußeres Erscheinungsbild sowie einen im Wesentlichen identischen Funktionsumfang aufweist, welcher vorzugsweise demjenigen der mobilen Einheit zumindest annähernd entsprechen sollte.

Diese Aufgabe löst erfindungsgemäß eine Vorrichtung gemäß Patentanspruch 1. Vorteilhafte Ausführungsformen sind Gegenstand der Unteransprüche.

Demnach weist eine erfindungsgemäße Vorrichtung zur Aufnahme einer mobilen Einheit einen Schacht auf, mit einer Öffnung, die Abmessungen besitzt, welche mit Abmessungen einer Fläche der mobilen Einheit im Wesentlichen identisch sind. Darüber hinaus ist eine Platte vorgesehen, mit einer Fläche, die Abmessungen besitzt, die ebenfalls mit den Abmessungen der Fläche der mobilen Einheit im Wesentlichen identisch sind, wobei die Platte innerhalb des Schachts beweglich ist. Schließlich ist ein Ver- und Entriegelungsmechanismus vorgesehen, um die Platte innerhalb des Schachts lösbar in einer Position zu verriegeln, in der sie die Öffnung des Schachts abschließt, wenn keine mobile Einheit in der Vorrichtung aufgenommen ist, und um die Platte freizugeben, wenn die Platte mit einer mobilen Einheit in in operativer Wechselwirkung gebracht wird. Für den Datenaustausch zwischen der Vorrichtung und einer mobilen Einheit weist die Vorrichtung eine Drahtlosschnittstelle auf.

Die erfindungsgemäße Vorrichtung kann mit einem Gebäudesteuerungs-Bus-System oder einer lokalen Gebäudesystemkomponente kommunikativ in Verbindung stehen und somit insbesondere auch die Funktion eines Bindeglieds zwischen einer mobilen Einheit und dem Gebäudesteuerungs-Bus-System bzw. der lokalen Gebäudesystemkomponente übernehmen. Unabhängig davon, kann die erfindungsgemäße Vorrichtung je nach Ausführungsform dazu vorgesehen sein, eine direkte Ansteuermöglichkeit entweder eines Gebäudesteuerungs-Bus-Systems oder einer lokalen Gebäudesystemkomponente zu bieten. Neben der Steuerfunktion entweder mit Bezug auf das Gebäudesteuerungs-Bus-System oder die lokale Gebäudesystemkomponente, kann die erfindungsgemäße Vorrichtung auch über eine Anzeigefunktion verfügen, über welche beispielsweise ein Zustand entweder des Gebäudesteuerungs-Bus-Systems oder der lokalen Gebäudesystemkomponente darstellbar ist.

Bei einer einfachen Ausführungsform der Erfindung steht die Vorrichtung mit genau einer Gebäudesystemkomponente, beispielsweise einer Lampe, oder einer Gruppe Gebäudesystemkomponenten, beispielsweise einer Gruppe von Lampen, welche gleichzeitig oder unabhängig voneinander in Betrieb und außer Betrieb genommen werden soll, kommunikativ in Verbindung, so dass über die Vorrichtung die einzelne Gebäudesystemkomponente oder eine Gruppe dieser ansteuerbar ist und/oder ein Zustand dieser anzeigbar ist.

Ist die erfindungsgemäße Vorrichtung darauf ausgelegt, mit einem Gebäudesteuerungs-Bus-System zu kommunizieren, weist sie eine Kommunikationsverbindung für den Datenaustausch zwischen der Vorrichtung und dem Gebäudesteuerungs-Bus-System auf. In diesem Fall weist sie auch zweckmäßigerweise eine Eingabe- und/oder Ausgabeeinheit für das Ansteuern des Haussteuerungs-Bus-Systems über die Kommunikationsverbindung auf. Analog können die Kommunikationsverbindung und die Eingabe- und/oder Ausgabeeinheit auch für die Kommunikation der Vorrichtung mit lokalen Gebäudesystemkomponenten vorliegen.

Auch für den Fall, dass die erfindungsgemäße Vorrichtung dazu vorgesehen ist, einzelne oder eine Gruppe Gebäudesystemkomponenten wie zuvor beschrieben zu verwalten, kann eine Kommunikationsverbindung für den Datenaustausch zwischen den Gebäudesystemkomponenten und der Vorrichtung vorgesehen sein. Wahlweise kann bei dieser Ausführungsform der Erfindung das Schalten der Energiezufuhr zu den einzelnen Gebäudesystemkomponenten zentral in der erfindungsgemäßen Vorrichtung, oder mit Hilfe von über die Kommunikationsverbindung ansteuerbaren Schaltern erfolgen.

Eine besonders einfache Ausbildung der letztgenannten Ausführungsform sieht vor, dass die Vorrichtung die Funktion eines An/Aus-Schalters für einen elektrischen Verbraucher, beispielsweise die Raumbeleuchtung, übernimmt. Bei dieser Ausführungsform kann beispielsweise die Platte der Vorrichtung bei nicht eingesetzter mobiler Einheit die Funktion einer Schalterwippe oder - tasters übernehmen, während bei eingesetzter mobiler Einheit die von außen sichtbare Fläche der mobilen Einheit dieselbe Funktion übernimmt. Der Fachmann wird erkennen, dass bei dieser Ausführungsform, unabhängig von dem erfindungsgemäßen Funktionsumfang des Ver- und Entriegelungsmechanismus, dieser zur Auslösung des Schaltvorgangs zumindest eingeschränkt beispielsweise die Verkippung der Platte bzw. der mobilen Einheit innerhalb der Vorrichtung zulassen muss. Zur Realisierung eines solchen Schalters, bei dem die Verkippung oder Verschiebung entweder der Platte oder der mobilen Einheit innerhalb der Öffnung die Auslösung des Schaltvorgangs bewirken soll, hat sich für die Übertragung der Schaltbewegung der Platte bzw. der mobilen Einheit auf die Vorrichtung die Verwendung von Relais als besonders zweckmäßig herausgestellt.

Eine erfindungsgemäße Vorrichtung ist vorzugsweise in einer standardisierten UnterputzDose zu verbauen und kann somit beispielsweise an Stelle eines Standard-Lichtschalters verwendet werden und diesen ersetzen.

Darüber hinaus dient eine erfindungsgemäße Vorrichtung vorzugsweise auch zum Wiederaufladen eines internen Energiespeichers der mobilen Einheit, beispielsweise eines Akkumulators. Die Ladefunktion ist mit aus dem Stand der Technik bekannten Mitteln zu erreichen, wobei jedoch besonders bevorzugt ein induktiver Ladevorgang Anwendung findet.

Die erfindungsgemäße Vorrichtung löst die zentrale Aufgabe, eine mobile Einheit mit einem Gebäudesteuerungs-Bus-System bzw. mit lokalen Gebäudesystemkomponenten für den Datenaustausch und/oder die Ansteuerung zu verbinden, wobei die Verbindung unabhängig davon bestehen kann, ob die mobile Einheit in der erfindungsgemäßen Vorrichtung aufgenommen ist oder nicht. Während die Anbindung der mobilen Einheit an die erfindungsgemäße Vorrichtung bei nicht aufgenommener Einheit drahtlos ausgeführt ist, soll diese Verbindung für den Fall, dass die mobile Einheit in der Vorrichtung aufgenommen ist, auf kein bestimmtes Datenübertragungsverfahren beschränkt sein.

Schließlich soll die vorgeschlagene Vorrichtung besonders bevorzugt zumindest eine Fläche aufweisen, welche bezüglich ihrer optischen Anmutung und funktional mit einer Bedien- oder Anzeigefläche der mobilen Einheit übereinstimmt. Es ist erfindungsgemäß vorgesehen, dass bei aufgenommener Bedieneinheit diejenige Fläche der Bedieneinheit, welche eine gleiche optische Anmutung und gleiche funktionale Merkmale bezüglich einer Fläche der Vorrichtung aufweist, derart in der Öffnung der erfindungsgemäßen Vorrichtung angeordnet ist, dass sie die entsprechende Fläche der Vorrichtung aus Sicht eines Betrachters gerade ersetzt, so dass nicht sichtbar ist, ob sich eine mobile Einheit in der Vorrichtung befindet oder nicht. Zur Erzielung der optischen Identität der korrespondierenden Flächen kann vorgesehen sein, dass zumindest eine dieser über ein Display oder ein ähnliches Anzeigeelement verfügt. Lediglich beispielhaft sei ausgeführt, dass die funktionale Identität der korrespondierenden Flächen auch mit Hilfe situationsabhängig variierbarer Gestaltungselemente, wie beispielsweise mit Hilfe von berührungssensitiven Displays, erreicht werden kann. Bei einer weiteren beispielhaften Ausführungsform umfassen die korrespondieren Flächen eine Anzeige über die beispielsweise Energieverbräuche einzelner Verbraucher anzeigbar sind. Dazu kann es vorgesehen sein, dass der Vorrichtung einzelne oder eine Gruppe von Verbrauchern zugeordnet ist, deren Energieverbrauch auf der Anzeige dargestellt wird.

Für die Entnahme der mobilen Einheit aus der erfindungsgemäßen Vorrichtung kann beispielsweise ein Auswurfmechanismus vorgesehen sein, welcher die Bedieneinheit aus dem Schacht der Vorrichtung zumindest teilweise herausschiebt, wenn ein Benutzer die Einheit mit einem Druck belastet. Je nach Ausführungsform ist auch denkbar, dass der Auswurfmechanismus elektromechanisch ausgelöst wird, so dass bereits das Betätigen eines Tasters, welcher unter anderem auch induktive, elektrische, magnetische oder mechanische Mittel umfassen kann, für den Ablauf des Auswurfvorgangs hinreichend ist. Sobald die mobile Einheit aus der Vorrichtung entnommen worden ist, wird die freiwerdende Öffnung in der Vorrichtung von der Platte verschlossen, welche die vorbeschriebene Fläche mit der im Vergleich zur mobilen Einheit identischen optischen Anmutung und demselben Funktionsumfang aufweist.

Darüber hinaus ist erfindungsgemäß ein Ver- und Entriegelungsmechanismus vorgesehen, welcher dafür sorgt, dass die Platte der Vorrichtung bei entnommener Einheit positionstreu innerhalb der Öffnung des Schachts angeordnet ist, und zwar genau in der Position, in welcher ihre vorbeschriebene charakteristische sichtbare Fläche die Position der optisch und funktional identischen Fläche der mobilen Einheit einnimmt, wenn die mobile Einheit in der Vorrichtung aufgenommen ist.

Erfindungsgemäß erfolgt die Freigabe des Ver- und Entriegelungsmechanismus genau dann, wenn eine mobile Einheit in operativer Wechselwirkung mit der Vorrichtung gebracht wird. Dies kann mit Hilfe induktiver, elektrischer, magnetischer oder mechanischer Mittel ausgeführt sein, welche der Ver- und Entriegelungsmechanismus aufweist. Wesentlich ist, dass der Ver- und Entriegelungsmechanismus derart ausgeführt ist, dass er die Platte freigibt, wenn eine mobile Einheit in die Nähe der Vorrichtung gebracht wird, also beispielsweise von einem Benutzer vor die Platte gehalten wird.

Vorzugsweise ist die Platte in Richtung der Öffnung des Schachts mechanisch oder pneumatisch vorgespannt. Bei dieser Ausführungsform ist es somit möglich, dass die Platte selbsttätig ihre durch den Ver- und Entriegelungsmechanismus vorbestimmte Position in der Öffnung des Schachts einnimmt, sobald die mobile Einheit aus der Vorrichtung entnommen wird. Auf der anderen Seite erfolgt bei dieser Ausführungsform der Erfindung das Einsetzen der mobilen Einheit in die Vorrichtung stets entgegen der von der vorgespannten Feder auf die Platte ausgeübten Kraft. Folglich ist es besonders zweckmäßig, den zuvor beschriebenen Auswurfmechanismus unter Verwendung der die Platte vorspannenden Feder auszuführen.

Bei einer weiteren Ausführungsform weist der Ver- und Entriegelungsmechanismus zumindest einen an der Platte angelenkten Klinken- oder Federhaken, welcher in der verriegelten Position der Platte mit einer Aussparung in dem Schacht in Eingriff steht, auf. Die Ausführung des Klinken- oder Federhakens kann insofern beliebig sein, als dass dieser lediglich die Eigenschaft aufweisen muss, in der von dem Ver- und Entriegelungsmechanismus und der Aussparung in dem Schacht vorgegebenen Position in der Aussparung einzurasten, und andererseits für jede übrige Position der Platte innerhalb des Schachts kein Hindernis für die Bewegung der Platte in dem Schacht darzustellen. Des Weiteren kann der Ver- und Entriegelungsmechanismus über Mittel verfügen, so dass in Folge der operativen Wechselwirkung der Platte mit einer mobilen Einheit der Klinken- oder Federhaken zumindest so weit vorgespannt wird, dass er die Platte freigibt, d. h. aus der Aussparung in dem Schacht vollständig heraustritt.

Bevorzugt sind jedoch zumindest zwei Klinken- oder Federhaken vorgesehen, von denen zumindest einer dazu ausgelegt ist, ein vollständiges oder teilweises Austreten der Platte aus der Öffnung zu verhindern, und von denen zumindest ein weiterer dazu ausgelegt ist, ein Verschieben der Platte aus der Öffnung in den Schacht hinein zu verhindern, wenn die Platte nicht mit einer mobilen Bedienelement in operativer Wechselwirkung steht. Es ist jedoch auch denkbar, einen Klinken- oder Federhaken derart auszuführen, dass er gleichzeitig die beiden Funktionen der zumindest zwei vorgenannten Haken übernimmt. Bei einer anderen Ausführungsform können zwar zumindest zwei getrennte Haken vorgesehen sein. Deren Betätigung, d. h. vor allem deren Vorspannung, kann jedoch gleichzeitig über ein die Haken verbindendes Mittel erfolgen.

Wie bereits beschrieben, ist erfindungsgemäß vorgesehen, dass die von außen sichtbare, die Schachtöffnung verschließende Fläche der Platte eine Gestaltung aufweist, welche mit derjenigen einer Fläche der mobilen Einheit im Wesentlichen identisch ist. Dabei kann es vorgesehen sein, dass die Übereinstimmung in der Gestaltung beider Flächen zumindest auf ein optisches, haptisches oder funktionales Merkmal zutrifft. Da die erfindungsgemäße Vorrichtung einerseits bei eingesetzter mobiler Bedieneinheit diese in ihrem Funktionsumfang nicht einschränken soll, andererseits jedoch bei entnommener Einheit die Vorrichtung selbst über den gesamten Bedienungsumfang oder den einer Fläche der mobilen Einheit verfügen soll, kann es je nach Ausführungsform der Vorrichtung vorgesehen sein, dass diese mechanische, elektrische oder kapazitive Schaltelemente für die Vorgabe eines Schaltvorgangs eines elektrischen Verbrauchers an das Gebäudesteuerungs-Bus-System aufweist. Besonders bevorzugt sind diese Schaltelemente zumindest teilweise auf der die Schachtöffnung verschließenden Fläche der Platte ausgeführt, oder zumindest von dieser Fläche aus bedienbar.

Je nach Ausführungsform kann die erfindungsgemäße Vorrichtung auch eine Anzeige zur visuellen Ausgabe von Information aufweisen. Auch diese Anzeige kann auf der die Schachtöffnung verschließenden Fläche der Platte ausgeführt sein, abhängig davon, ob die entsprechende Fläche der mobilen Einheit, welche bei eingesetzter mobiler Bedieneinheit sichtbar ist, über eine solche Anzeige verfügt. Es ist auch denkbar, dass die die Schachtöffnung verschließende Fläche der Platte eine Anzeige aufweist, unabhängig davon, ob die entsprechende Fläche der mobilen Einheit über eine solche Anzeige verfügt, beispielsweise dann, wenn die Anzeige auf der Plattenfläche dazu vorgesehen ist, die der Erfindung zugrundeliegende Identität der Flächen zu erreichen, indem sich die Anzeige an die optische Erscheinung der Bedieneinheitenfläche anpasst. Es handelt sich somit bei der Anzeige um eine situationsabhängig ausgeprägte Anzeige. Bei einer darauf aufbauenden Ausführungsform kann auch vorgesehen sein, dass nicht nur die Anzeige, und damit die optische Erscheinung, der Plattenfläche situationsabhängig ausgeführt ist, sondern darüber hinaus eine situationsabhängig ausgeprägte Eingabeeinheit vorgesehen ist. Besonders bevorzugt ist dabei wiederum, dass auch die situationsabhängig ausgeprägte Eingabeeinheit auf der die Schachtöffnung verschließenden Fläche der Platte ausgeführt ist. Dabei ist es beispielsweise möglich, dass die Eingabeeinheit ein berührungssensitives Display umfasst, auf dem Eingabeelemente situationsabhängig darstellbar sind und deren Aktivierung mit der Übertragung eines Steuerbefehls an das Gebäudesteuerungs-Bus-System bzw. die lokalen Gebäusesystemkomponenten verbunden ist. Das berührungssensitive Display kann dabei gleichzeitig als Eingabeeinheit und als Anzeige zur visuellen Ausgabe von Information dienen.

Darüber hinaus ist es zweckmäßig, jedoch nicht zwingend, dass eine erfindungsgemäße Vorrichtung für die operative Wechselwirkung magnetische Mittel vorsieht, welche bei aufgenommener Einheit die Einheit mit der Vorrichtung kraftschlüssig verbinden. Obwohl diese Doppelfunktion der magnetischen Mittel, einerseits für die operative Wechselwirkung und andererseits für die kraftschlüssige Verbindung beider Komponenten, bevorzugt sein kann, ist es ebenso möglich, dass die kraftschlüssige Verbindung über einen separaten Magnetsatz realisiert ist. Besonders bevorzugt ist zumindest ein Paar Permanentmagnete vorgesehen, von denen sich einer in der Platte der Vorrichtung und der andere innerhalb der Einheit nahe derjenigen Fläche befindet, welche bei eingesetzter Einheit der Platte zugewandt ist. Die Verwendung von magnetischen Mitteln für die Realisierung der operativen Wechselwirkung hat darüber hinaus den Vorteil, dass die bei Annäherung der Magnetpaare zwischen diesen herrschende Anziehungskraft dazu verwendet werden kann, den Ver- und Entriegelungsmechanismus zwecks Ent- oder Verriegelung der Platte mit einer Kraft zu beaufschlagen.

Da für die Entnahme der mobilen Einheit die kraftschlüssige Verbindung unterbrochen werden sollte, ist bei einer Ausführungsform vorgesehen, dass diese Unterbrechung genau dann eintritt, wenn sich die Platte in der durch den Ver- und Entriegelungsmechanismus vorgegebenen verriegelten Position, in welcher die Platte die Öffnung des Schachts abschließt, befindet.

Eine erfindungsgemäße Vorrichtung hat somit über die Funktion hinaus, eine mobile Einheit mit einem Gebäudesteuerungs-Bus-System bzw. lokalen Gebäudesystemkomponenten zu verbinden, die Vorteile, dass einerseits unabhängig davon, ob diese eine mobile Einheit aufgenommen hat, deren Funktionsumfang unverändert ist, und andererseits, dass weder bei aufgenommener noch bei entnommener mobiler Einheit eine optische Beeinträchtigung der Vorrichtung hervortritt.

Eine mobile Einheit im Sinne der vorliegenden Erfindung kann jegliche Einheit sein, welche für die drahtlose Steuerung von der Kommunikation mit Gebäudesystemkomponenten bzw. eines Gebäudesteuerungs-Bus-Systems und/oder für die Zustandsanzeige eines Gebäudesteuerungs-Bus-Systems oder von lokalen Gebäudesystemkomponenten geeignet ist. Besonders bevorzugt handelt es sich bei der mobilen Einheit um eine Fernbedienung entweder für ein Gebäudesteuerungs-Bus-System oder für einzelne lokale Gebäudesystemkomponenten, welche zusätzlich über zumindest eine Anzeige verfügt, mit der zumindest ein Zustand entweder des Gebäudesteuerungs-Bus-Systems oder der lokalen Gebäudesystemkomponenten anzeigbar ist.

Vorteilhafte Ausgestaltungen der Erfindung sind Gegenstand der nachfolgenden Figuren. Dabei zeigt:
- Figur 1: eine erfindungsgemäße Vorrichtung ohne aufgenommene mobile Einheit im Querschnitt;
- Figur 2: eine erfindungsgemäße Vorrichtung mit aufgenommener mobiler Bedieneinheit im Querschnitt;
- Figur 3: eine erfindungsgemäße Vorrichtung sowie eine mobile Einheit im Querschnitt; und
- Figur 4: eine Vorderansicht einer erfindungsgemäßen Vorrichtung sowie eine separate mobile Einheit.

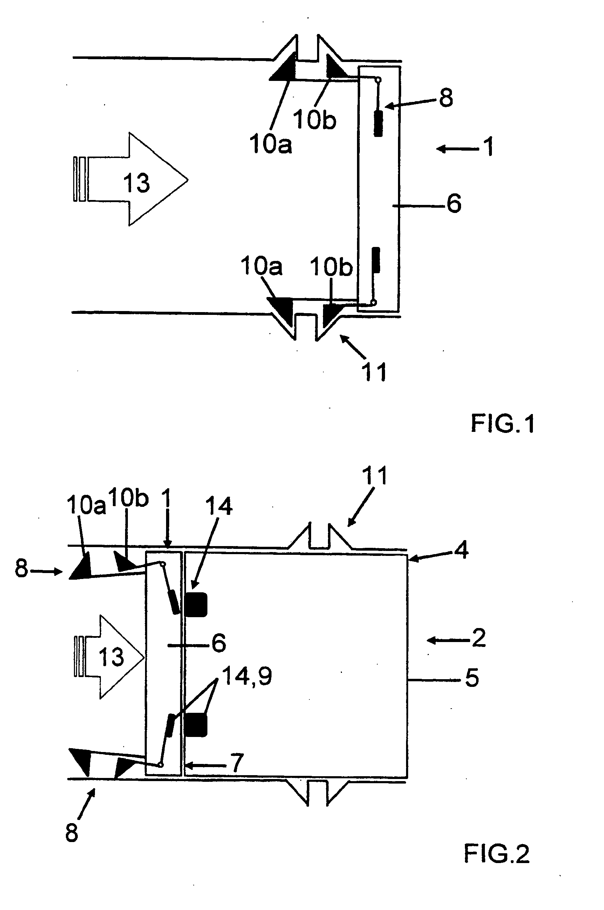

Figur 1 zeigt eine erfindungsgemäße Vorrichtung 1 ohne eine darin aufgenommene mobile Einheit 2. Folglich befindet sich auch, wie erfindungsgemäß vorgesehen, die Platte 6 in einer verriegelten Position in der Öffnung 4 des Schachts 3, wobei die Position der Platte 6 gerade dadurch definiert ist, dass sie in dieser mit ihrer Fläche 7 die Öffnung 4 abschließt, so wie es auch ein Element 2 mit seiner nicht dargestellten Fläche 5 tun würde, wäre ein solches in dem Schacht 3 aufgenommen. Weiterhin dargestellt ist der Ver- und Entriegelungsmechanismus 8, welcher die Platte 6 in der vorgegebenen Position mit Hilfe zweier Paare Federhaken 10a, 10b gegen ein Verschieben aus der vorgegebenen Position heraus fixiert. Ebenfalls dargestellt ist ein magnetisches Mittel 14, welches für die operative Wechselwirkung einer Einheit 2 bzw. mit einem darin angeordneten entgegengesetzt gepolten Magneten vorgesehen ist. Bei der dargestellten Ausführungsform ist die Platte 6 in Richtung der Öffnung 4 vorgespannt, beispielsweise federvorgespannt, wie es durch den Pfeil 13 angedeutet ist. Es ist ebenfalls zu erkennen, dass die Federhaken 10a ein Heraustreten der Platte 6 aus der Öffnung 4 aus dem Schacht heraus trotz der herrschenden Vorspannung 13 verhindern.

Figur 2 zeigt eine erfindungsgemäße Vorrichtung 1 mit einer darin aufgenommenen mobilen Einheit 2. Es ist zu erkennen, dass die mobile Einheit 2 über Magnetenpaare 14 mit der Vorrichtung 1 und dem Ver- und Entriegelungsmechanismus 8 in operativer Wechselwirkung steht. Ebenfalls dargestellt ist, dass in Folge der operativen Wechselwirkung die Federhaken 10a, 10b aus den Aussparungen 11 hinaus in den Schacht 3 hinein bewegt wurden, wodurch erst das Einsetzen der mobilen Einheit 2 möglich wurde, da dies zwingend erforderte, dass die Platte 6 entgegen der Vorspannung 13 aus der Öffnung 4 des Schachts 3 hinaus in das Innere des Schachts 3 hinein bewegt werden konnte.

In der Zusammenschau der Figuren 1 und 2 ist zu erkennen, dass für das Hineinbewegen der Platte 6 in den Schacht 3 hinein zwingend die Herauslösung der Federhaken 10b aus der zugeordneten Aussparung 11 hinaus notwendig ist. Weiterhin ist der Zusammenschau zu entnehmen, dass bei aufgenommener mobiler Bedieneinheit 2 die Fläche 5 der mobilen Einheit 2 gerade die Position der Fläche 7 der Platte 6 einnimmt, wenn keine mobile Einheit in der Vorrichtung 1 aufgenommen ist.

Wie erfindungsgemäß gefordert, verfügen sowohl die Platte 6 als auch die Einheit 2 über zumindest annähernd identische Formfaktoren, so dass nicht nur die Lage der Fläche 5 mit der der Fläche 7 bei nicht aufgenommener Einheit 2 übereinstimmt, sondern darüber hinaus auch die Abdeckung der Öffnung 4 durch jede der beiden Flächen 5, 7 zumindest annähernd identisch ist. Dieser Umstand trägt entscheidend zu dem erfindungsgemäß vorgesehenen einheitlichen Erscheinungsbild der Vorrichtung 1 bei.

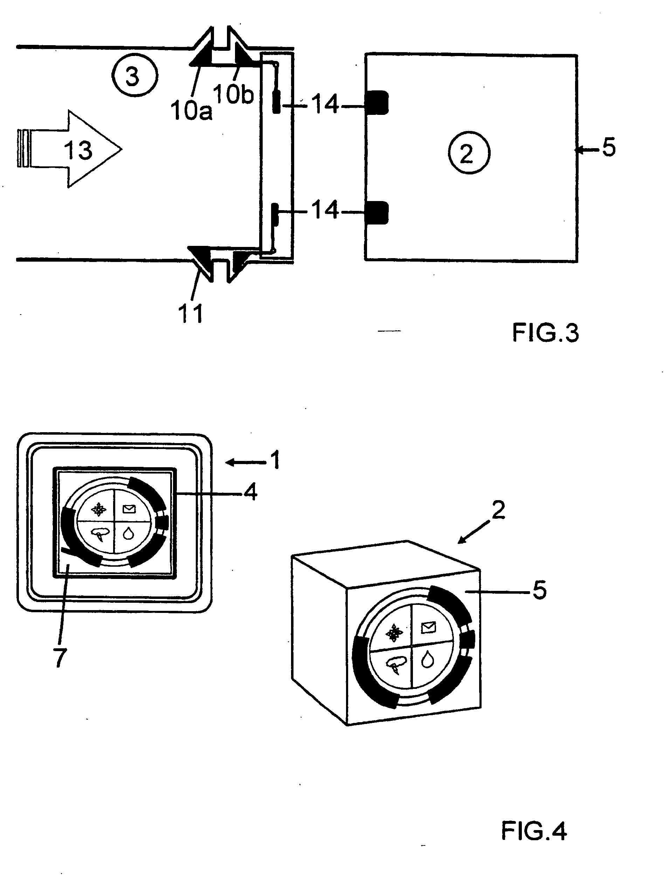

Ergänzend zu den Figuren 1 und 2 zeigt Figur 3 eine erfindungsgemäße Vorrichtung 1 sowie eine mobile Einheit 2 in einer relativen Anordnung zueinander, wie sie für die für die Aufnahme der Einheit 2 notwendige operative Wechselwirkung einander angenähert werden könnten. Da bei der in den Figuren 1 bis 3 dargestellten Ausführungsform der Erfindung die magnetischen Mittel 9 für die operative Wechselwirkung gleichzeitig dazu dienen, den Ver- und Entriegelungsmechanismus 8, etwa zum Entriegeln der Federhaken 10 aus den Aussparungen 11 hinaus, mit einer Kraft zu beaufschlagen, kann es bei der dargestellten Ausführungsform vorgesehen sein, dass sich die Magnetenpaare 14 bis auf eine geeignete Entfernung annähern müssen, um eine gegenseitige Anziehungskraft auszubilden, welche ausreichend ist, um die Federhaken 10, etwa gegen eine Vorspannung, aus den Aussparungen 11 zu lösen.

Figur 4 zeigt eine Frontansicht einer erfindungsgemäßen Vorrichtung 1 sowie eine perspektivische Ansicht einer mobilen Einheit 2. Da sich die mobile Einheit 2, wie dargestellt, außerhalb der Vorrichtung 1 befindet, nimmt die Vorrichtung 1 einen Zustand ein, in welchem sich die Platte 6 der Vorrichtung 1 innerhalb der Öffnung 4 des Schachts 3 befindet, um diesen optisch ansprechend abzuschließen. Ebenfalls dargestellt ist eine beispielhafte Ausführungsform der Fläche 7 der Platte 6 mit Schaltelementen 12, welche im Wesentlichen identisch mit denen auf der Fläche 5 der Bedieneinheit 2 sind. Die Schaltelemente 12 können, wie dargestellt, beispielsweise mechanisch zu betätigende Tasten, oder auch ein berührungssensitives "touch wheel" umfassen. Es ist ebenfalls denkbar, dass die Fläche 7, entsprechend einer möglichen Fläche 5, ein Anzeigeelement umfasst, oder über die gesamte Fläche in Form eines Displays, vorzugsweise eines berührungssensitiven Displays, ausgeführt ist. Eine weitere Ausbildung dieser Ausführungsform umfasst mechanisch zu betätigende Tasten, welche auf ihrer sichtbaren Oberfläche ein Anzeigeelement umfassen, auf welchem die Belegung der entsprechenden Taste anzeigbar ist. Es wird somit deutlich, dass die zuvor beschriebene Ausgestaltung der Fläche 7 es grundsätzlich ermöglicht, deren optische und funktionale Ausprägung an die Ausprägung einer Fläche 4 einer mobilen Einheit 2 zumindest so weit anzupassen, dass für einen Benutzer wenigstens der Eindruck identischer Optik und Funktionalität entsteht. Bevorzugt besteht auch tatsächlich Identität in den vorgenannten Eigenschaften.

### Bezugszeichenliste:

- 1: Vorrichtung zur Aufnahme einer mobilen Bedieneinheit
- 2: mobile Einheit
- 3: Schacht
- 4: Öffnung
- 5: Fläche der mobilen Bedieneinheit
- 6: Platte
- 7: Fläche der Platte
- 8: Ver- und Entriegelungsmechanismus
- 9: induktive, elektrische, magnetische oder mechanische Mittel
- 10a, 10b: Klinken oder Federhaken
- 11: Aussparung
- 12: Schaltelement
- 13: Vorspannung der Platte
- 14: Magnetenpaare

## Patentansprüche

1. Vorrichtung (1) zur Aufnahme einer mobilen Einheit (2), wenigstens aufweisend:
- einen Schacht (3), mit einer Öffnung (4), die Abmessungen besitzt, welche mit Abmessungen einer Fläche (5) der mobilen Einheit (2) im Wesentlichen identisch sind;
- eine Platte (6), mit einer Fläche (7), die Abmessungen besitzt, die ebenfalls mit den Abmessungen der Fläche (5) der mobilen Einheit (2) im Wesentlichen identisch sind, wobei die Platte (6) innerhalb des Schachts (3) beweglich ist;
- eine Drahtlosschnittstelle für den Datenaustausch zwischen der Vorrichtung (1) und einer mobilen Einheit (2),
**dadurch gekennzeichnet, dass** sie
einen Ver- und Entriegelungsmechanismus (8) aufweist, um die Platte (6) innerhalb des Schachts (3) lösbar in einer Position zu verriegeln, in der sie die Öffnung (4) des Schachts (3) abschließt, wenn keine mobile Einheit (2) in der Vorrichtung (1) aufgenommen ist, und um die Platte (6) freizugeben, wenn die Platte (6) mit einer mobilen Einheit (2) in operative Wechselwirkung gebracht wird;

2. Vorrichtung nach Anspruch 1, **dadurch gekennzeichnet, dass** sie weiterhin eine Kommunikationsverbindung für den Datenaustausch zwischen der Vorrichtung (1) und einem Gebäudesteuerungs-Bus-System aufweist.

3. Vorrichtung nach Anspruch 2, **dadurch gekennzeichnet, dass** sie weiterhin eine Eingabe- und/oder Ausgabeeinheit für das Ansteuern des Gebäudesteuerungs-Bus-Systems und/oder einer lokalen Gebäudesystemkomponente über die Kommunikationsverbindung aufweist.

4. Vorrichtung nach Anspruch 1, **dadurch gekennzeichnet, dass** der Ver- und Entriegelungsmechanis für die operative Wechselwirkung induktive, elektrische, magnetische oder mechanische Mittel (9) aufweist.

5. Vorrichtung nach einem der vorangegangenen Ansprüche, **dadurch gekennzeichnet, dass** die Platte (6) in Richtung der Öffnung (4) mechanisch oder pneumatisch vorgespannt ist.

6. Vorrichtung nach einem der vorangegangenen Ansprüche, **dadurch gekennzeichnet, dass** der Ver- und Entriegelungsmechanismus (8) zumindest einen an der Platte (6)
angelenkten Klinken- oder Federhaken (10) aufweist, welcher 3 in der verriegelten Position der Platte (6) mit einer Aussparung (11) in dem Schacht (3) in Eingriff steht.

7. Vorrichtung nach Anspruch 5 und 6, **dadurch gekennzeichnet, dass** sie zumindest zwei Klinken- oder Federhaken (10) aufweist, von denen zumindest einer (10a) dazu ausgelegt ist, ein vollständiges oder teilweises Austreten der Platte (6) aus der Öffnung (4) und aus dem Schacht (3) heraus zu verhindern, und von denen zumindest ein weiterer (10b) dazu ausgelegt ist, ein Verschieben der Platte (6) aus der Öffnung (4) in den Schacht (3) hinein zu verhindern, wenn die Platte (6) nicht mit einer mobilen Einheit (2) in operativer Wechselwirkung steht.

8. Vorrichtung nach einem der vorangegangenen Ansprüche, **dadurch gekennzeichnet, dass** die von außen sichtbare, die Schachtöffnung (4) verschließende Fläche (7) der Platte (6) eine Gestaltung aufweist, welche mit derjenigen der Fläche (5) der mobilen Einheit (2) im Wesentlichen identisch ist.

9. Vorrichtung nach Anspruch 8, **dadurch gekennzeichnet, dass** die Gestaltung beider Flächen (5, 7) zumindest in einem optischen, haptischen oder funktionalen Merkmal übereinstimmt.

10. Vorrichtung nach einem der vorangegangenen Ansprüche, **dadurch gekennzeichnet, dass** sie mechanische, elektrische oder kapazitive Schaltelemente (12) für die Vorgabe eines Schaltvorganges eines elektrischen Verbrauchers an das Gebäudesteuerungs-Bus-System aufweist.

11. Vorrichtung nach einem der vorangegangenen Ansprüche, **dadurch gekennzeichnet, dass** sie eine Anzeige zur visuellen Ausgabe von Information aufweist.

12. Vorrichtung nach Anspruch 10 oder 11, bei der die Schaltelemente (12) oder die Anzeige auf der Fläche (7) der Platte (6) angeordnet sind.

13. Vorrichtung nach einem der vorangegangenen Ansprüche, **dadurch gekennzeichnet, dass** sie Mittel für das Laden eines elektrischen Energiespeichers einer mobilen Einheit (2) aufweist.

14. Vorrichtung nach Anspruch 13, **dadurch gekennzeichnet, dass** die Mittel eine induktive Ladevorrichtung aufweisen.

15. Vorrichtung nach einem der vorangegangenen Ansprüche, **dadurch gekennzeichnet, dass** für die operative Wechselwirkung magnetische Mittel vorgesehen sind, welche bei aufgenommener mobiler Einheit (2)diese mit der Vorrichtung kraftschlüssig verbinden.

16. Vorrichtung nach Anspruch 15, bei der die kraftschlüssige Verbindung unterbrochen wird, wenn die Platte (6) die verriegelte Position einnimmt.

17. Vorrichtung nach einem der vorangegangenen Ansprüche, **dadurch gekennzeichnet, dass** sie einen Mechanismus zum Auswerfen einer aufgenommenen mobilen Einheit (2) aufweist.

18. Vorrichtung nach einem der vorangegangenen Ansprüche, **dadurch gekennzeichnet, dass** die Fläche (7) der Platte (6) ein berührungssensitives Display umfasst, auf dem Eingabeelemente situationsabhängig darstellbar sind und deren Aktivierung mit der Übertragung eines Steuerbefehls über die Kommunikationsverbindung an das Gebäudesteuerungs-Bus-System verbunden ist.

## Claims

1. A device for holding a mobile unit (2), at least comprising:
- a slot (3) having an opening (4) with dimensions which are substantially identical with dimensions of a surface (5) of the mobile unit (2);
- a plate (6) having a surface (7) with dimensions which are also substantially identical with the dimensions of the surface (5) of the mobile unit (2), the plate (6) being movable within the slot (3);
- a wireless interface for data exchange between the device (1) and a mobile unit (2),
**characterized in that** it comprises a locking and unlocking mechanism (8) to releasably lock the plate (6) within the slot (3) at a position where it closes the opening (4) of the slot (3) when no mobile unit (2) is held within the slot (3) and to release the plate (6) when the plate (6) is brought in operative interaction with a mobile unit (2).

2. The device of claim 1, **characterized by** further comprising a communication link for data exchange between the device (1) and a building control-bus system.

3. The device of claim 2, **characterized by** further comprising an input and/or output unit to control the building control-bus system and/or a local building system component via the communication link.

4. The device of claim 1, **characterized in that** the locking and unlocking mechanism comprises inductive, electric, magnetic or mechanic means for the operative interaction.

5. The device of any of the previous claims, **characterized in that** the plate (6) is mechanically or pneumatically biased towards the opening (4).

6. The device of any of the previous claims, **characterized in that** the locking and unlocking mechanism (8) comprises at least one catch or spring hook (10) hinged to the plate (6) which, in the locked position of the plate (6), engages a recess (11) in the slot (3).

7. The device of claim 5 or 6, **characterized in that** it comprises at least two catch or spring hooks (10), at least one (10a) of them being configured to prevent complete or partial stepping out of the plate (6) from the opening (4) and from the slot (3), and at least another one (10b) being configured to prevent moving of the plate (6) from the opening (4) into the slot (3) when the plate (6) is not in operative interaction with a mobile unit (2).

8. The device of any of the previous claims, **characterized in that** the surface (7) closing the opening (4) which is visible from outside comprises a design which is substantially identical with that of the surface (5) of the mobile unit (2).

9. The device of claim 8, **characterized in that** the design of both surfaces (5, 7) coincides at least in one optical, haptic or functional feature.

10. The device of any of the previous claims, **characterized by** comprising mechanical, electric or capacitive switching elements (12) to allow a switching process of an electric load to the building control-bus system.

11. The device of any of the previous claims, **characterized by** comprising a display for visual output of information.

12. The device of claim 10 or 11 wherein the switching elements (12) or the display are arranged on the surface (7) of the plate (6).

13. The device of any of the previous claims, **characterized by** comprising means for charging an electric energy storage of a mobile unit (2).

14. The device of claim 13, **characterized in that** the means comprise an inductive charging device.

15. The device of any of the previous claims, **characterized in that** magnetic means are provided for the operative interaction which force-locking couple the mobile unit (2) and the device when it is held therein.

16. The device of claim 15, wherein the force-locking coupling is interrupted when the plate (6) is in the locked position.

17. The device of any of the previous claims, **characterized by** comprising a mechanism for ejecting a captured mobile unit (2).

18. The device of any of the previous claims, **characterized in that** the surface (7) of the plate (6) includes a touch-sensitive display on which input elements can be illustrated depending on the situation and the activation thereof being associated with transmission of a control command to the building control-bus system via the communication link.

## Revendications

1. Dispositif (1) destiné à recevoir une unité (2) mobile, comportant au moins :
- une cage (3) avec une ouverture (4) dont les dimensions sont sensiblement identiques aux dimensions d'une surface (5) de l'unité (2) mobile ;
- une plaque (6) avec une surface (7) dont les dimensions sont également sensiblement identiques aux dimensions de la surface (5) de l'unité (2) mobile, ladite plaque (6) étant mobile à l'intérieur de la cage (3) ;
- une interface sans fil pour un échange de données entre ledit dispositif (1) et une unité (2) mobile ;
**caractérisé en ce que** ledit dispositif comporte un mécanisme de verrouillage et déverrouillage (8), pour verrouiller de manière amovible la plaque (6) à l'intérieur de la cage (3) dans une position, dans laquelle elle obture l'ouverture (4) de la cage (3) lorsque aucune unité (2) mobile n'est logée dans le dispositif (1), et pour débloquer la plaque (6) lorsque la plaque (6) est amenée en interaction opérationnelle avec une unité (2) mobile.

2. Dispositif selon la revendication 1, **caractérisé en ce qu'**il comporte, en outre, une liaison de communication pour l'échange de données entre ledit dispositif (1) et un système de bus de commande du bâtiment.

3. Dispositif selon la revendication 2, **caractérisé en ce qu'**il comporte, en outre, une unité d'entrée et/ ou de sortie pour actionner le système de bus de commande du bâtiment et/ou un composant local du système via la liaison de communication.

4. Dispositif selon la revendication 1, **caractérisé en ce que** le mécanisme de verrouillage et déverrouillage comporte des moyens (9) inductifs, électriques, magnétiques ou mécaniques pour l'interaction opérationnelle.

5. Dispositif selon l'une quelconque des revendications précédentes, **caractérisé en ce que** la plaque (6) est précontrainte par voie mécanique ou pneumatique dans la direction de l'ouverture (4).

6. Dispositif selon l'une quelconque des revendications précédentes, **caractérisé en ce que** le mécanisme de verrouillage et déverrouillage (8) comporte au moins un crochet à cliquet ou ressort (10), qui est articulé contre la plaque (6) et qui, dans la position verrouillée de la plaque (6), entre en prise dans un évidement (11) dans la cage (3).

7. Dispositif selon les revendications 5 et 6, **caractérisé en ce qu'**il comporte au moins deux crochets à cliquet ou ressort (10) dont au moins un (10a) est configuré pour empêcher que la plaque (6) sorte complètement ou partiellement de l'ouverture (4) et de la cage (3), et dont au moins un autre (10b) est configuré pour empêcher un déplacement de la plaque (6) hors de l'ouverture (4) vers l'intérieur de la cage (3) lorsque ladite plaque (6) n'est pas en interaction opérationnelle avec une unité (2) mobile.

8. Dispositif selon l'une quelconque des revendications précédentes, **caractérisé en ce que** la surface (7) de la plaque (6), visible de l'extérieur et obturant l'ouverture (4) de la cage, possède une forme qui est sensiblement identique à celle de la surface (5) de l'unité (2) mobile.

9. Dispositif selon la revendication 8, **caractérisé en ce que** la forme des deux surfaces (5, 7) coïncide au moins dans une caractéristique optique, haptique ou fonctionnelle.

10. Dispositif selon l'une quelconque des revendications précédentes, **caractérisé en ce qu'**il comporte des éléments de commutation (12) mécaniques, électriques ou capacitifs pour imposer un processus de commutation d'un consommateur électrique au système de bus de commande du bâtiment.

11. Dispositif selon l'une quelconque des revendications précédentes, **caractérisé en ce qu'**il comporte un afficheur pour l'affichage visuel d'une information.

12. Dispositif selon la revendication 10 ou 11, dans lequel les éléments de commutation (12) ou l'afficheur sont disposés sur la surface (7) de la plaque (6).

13. Dispositif selon l'une quelconque des revendications précédentes, **caractérisé en ce qu'**il comporte des moyens pour le chargement d'un accumulateur d'énergie électrique d'une unité (2) mobile.

14. Dispositif selon la revendication 13, **caractérisé en ce que** les moyens comportent un chargeur inductif.

15. Dispositif selon l'une quelconque des revendications précédentes, **caractérisé en ce que** des moyens magnétiques sont prévus pour l'interaction opérationnelle, par lesquels l'unité (2) mobile, logée dans ledit dispositif, est assemblée par force avec ledit dispositif.

16. Dispositif selon la revendication 15, dans lequel l'assemblage par force est supprimé lorsque la plaque (6) est amenée dans la position verrouillée.

17. Dispositif selon l'une quelconque des revendications précédentes, **caractérisé en ce qu'**il comporte un mécanisme pour éjecter une unité (2) mobile logée dans ledit dispositif.

18. Dispositif selon l'une quelconque des revendications précédentes, **caractérisé en ce que** la surface (7) de la plaque (6) comporte un afficheur sensible au toucher, sur lequel peuvent être représentés, en fonction de la situation, des éléments d'entrée et l'activation de ceux-ci est liée à la transmission d'une instruction de commande via la liaison de communication vers le système de bus de commande du bâtiment.
